# EUROPEAN PATENT SPECIFICATION

(11) **EP 3 869 372 B1**
(45) Date of publication and mention of the grant of the patent: **13.11.2024**
(21) Application number: 20158360.6
(22) Date of filing: 19.02.2020
(51) Int. Cl.: G06F 21/60, G06F 21/62, H04L 9/00, G06Q 30/02, G06Q 30/0241, G06Q 30/06, G06Q 30/0201, G06F 16/245, G06Q 20/38, G06Q 20/20

(54) **A METHOD OF SENDING DATA**
VERFAHREN ZUM SENDEN VON DATEN
PROCÉDÉ D'ENVOI DE DONNÉES

(43) Date of publication of application: 25.08.2021
(73) Proprietor: Mastercard International Incorporated, Purchase NY 10577 (US)
(72) Inventor: WARD, Michael, Taunton, Somerset TA4 2JB (GB); SMETS, Patrik, 2560 Nijlen (BE)
(74) Representative: Richardson, Mark Jonathan

(56) References cited:
- US-A1- 2015 073 989
- US-A1- 2016 078 431
- US-A1- 2017 031 963

## Description

### TECHNICAL FIELD

The present disclosure relates to a method of retrieving data. In particular, the disclosure relates to the provision of anonymised transaction data. The disclosure relates to a method of sending data related to cardholder transactions and a database comprising transaction data related to cardholder transactions.

### BACKGROUND

When cardholders undertake transactions a receipt relating to the transaction is generated. Traditionally such receipts have been provided in either hard-copy form (a printed receipt) and/or in electronic form (e.g. a copy of a receipt may be emailed to a cardholder both in cardholder present transactions and also in cardholder not present transactions that occur via an online merchant).

Subsequent to a transaction between a cardholder and a merchant limited transaction data may be available for later retrieval by the cardholder.

Where merchants offer goods or services to consumers, incentives may be offered in order to seek to increase sales. Tracking the effectiveness of such incentive campaigns may require the sharing of transaction related data between two or more entities. In order to share such information a suitable data exchange protocol is required which maintains an agreed level of privacy and confidentiality for the various stakeholders involved in the transaction (e.g. cardholder, merchant, product manufacturer and promoter). US2017031963 describes a method of tracking tagged transaction data corresponding to transactions between users and merchants is provided. The method includes receiving, by the tag tracking computing device, a plurality of transaction signals including a plurality of transaction data associated with the transactions.

The present disclosure aims to provide improved transaction related data retrieval and transaction sharing.

### SUMMARY OF THE DISCLOSURE

The present invention is defined in the independent claims. Preferred embodiments are defined in the dependent claims. According to a first aspect of the present disclosure, there is provided a method of sending data related to cardholder transactions, comprising: receiving transaction data from a merchant relating to the cardholder transactions, the transaction data comprising itemised product data and payment device data, the itemised product data comprising itemised receipt line items for goods or services received from the merchant; storing, for each transaction, the received transaction data relating to that transaction in a transaction record in a database; aggregating received transaction data and storing the aggregated transaction data in the transaction records; receiving a request for data related to cardholder transactions stored in the database; querying the database and returning aggregated transaction data to a third party, wherein each transaction record comprises a transaction ID and wherein the database defines a set of attributes relating to the transaction records, the method comprising: generating a polynomial Ai(X) for each attribute where the zeros of the polynomial correspond to the transaction IDs of the records that have the ith attribute; assigning a Tag, Tag_i, to each attribute and encrypting (509) each Ai(x) as Enc (Ai(x)); sending the set {Tag_i, Enc(Ai(x))} to a proxy database; receiving an encrypted and blinded polynomial Enc(B(x)) from the proxy database, the polynomial Enc (B(x)) comprising attributes selected by a third party; decrypting Enc(B(x)) with the third party.

The present disclosure provides a method of receiving transaction data related to cardholder transactions, storing and aggregating the received data before returning, in response to a request, the aggregated data to a third party. The received transaction data comprises itemised product data (e.g. the products bought in the transaction) and payment device data (which enables a cardholder to send a request for their receipt data and for this data to be returned to the cardholder).

The present disclosure therefore enables cardholders to obtain a digital record of their itemised receipt data and third parties to perform analytics on suitably anonymised and aggregated data. Services such as Mastercard's M/Chip Tap and Connect allow itemised lists of items purchased by a cardholder in a transaction to be collected and stored.

The received transaction data is also anonymised and the aggregated and anonymised transaction data may be stored in the transaction records.

According to a second aspect of the present disclosure there is provided a database system comprising transaction data related to cardholder transactions, the database system comprising: an input arranged to receive transaction data from a merchant relating to cardholder transactions, the transaction data comprising itemised product data and payment device data, the itemised product data comprising itemised receipt line items for goods or services received from the merchant; ; a processor arranged to: store, for each transaction, the received transaction data relating to that transaction in a transaction record; aggregate received transaction data and store the aggregated transaction data in the transaction records; an output for outputting transaction data wherein the input is arranged to further receive requests for cardholder transactions stored in the database and the processor is arranged to query the transaction records and return aggregated transaction data to a third party, the output being arranged to output the returned transaction data to the cardholder or third party wherein each transaction record comprises a transaction ID and wherein the database system defines a set of attributes relating to the transaction records, the processor being arranged to: generate a polynomial Ai(X) for each attribute where the zeros of the polynomial correspond to the transaction IDs of the records that have the ith attribute; assign a Tag, Tag_i, to each attribute and encrypt (509) each Ai(x) as Enc (Ai(x)) wherein the output is arranged to send the set {Tag_i, Enc(Ai(x))} to a proxy database and the input is arranged to receive an encrypted and blinded polynomial Enc(B(x)) from the proxy database, the polynomial Enc (B(x)) comprising attributes selected by a third party; and the processor is arranged to decrypt Enc(B(x)) with the third party.

According to an example useful for understanding the present disclosure described above, where the received request for data related to cardholder transactions comprises receiving a request for product data related to a specific product from a third party, the method may further comprise: filtering the database transaction data to identify a set P of cardholder accounts that have completed a transaction for the specific product; calculating M(P), where M() is a one way commutative function; receiving G(C) from the third party, where G() is a one way commutative function known to the third party and C is a set of data identifying accounts that have interacted with a campaign hosted by the third party for the specific product; calculating MG(C) and sending to third party such that the third party can determine the intersection of MG(P) and MG(C).

The set MG(C) may be shuffled before sending to the third party. Fictitious cardholder accounts may be added to the set P.

M() may be a commutative one-way function, such as an elliptic curve scalar multiplication function. G() may be a commutative one-way function such as an elliptic curve scaler multiplication function.

According toan example useful for understanding the present disclosure described above, where the received request for data related to cardholder transactions comprises receiving a request for product data related to a specific product from a third party, the method may further comprise: filtering the database transaction data to identify a set P of cardholder accounts, IDx, that have completed a transaction for the specific product for value Vx, such that P={IDx : Vx}; sending {M(IDx): E(Vx)} to the third party, where M() is a one way commutative function and E() is a homomorphic encryption function; receiving {GM(IDx):E(Vx+Rx)} from the third party, where Rx is a blinding factor applied by a third party; receiving {G(IDy)} from the third party, where G() is a one way commutative function known to the third party and {IDy} is a set of data identifying accounts that have interacted with a campaign hosted by the third party for the specific product; determining, at the database, an intersection set J of {GM(IDx)} and {MG(IDy)} and the set {E(Vx+Rx)}; decrypting values {Vx+Rx}; sending J and a total blinded sum S to the third party.

The received request may be for a class of products and the database may be filtered for cardholder accounts that have completed a transaction for the product class.

The method may comprise receiving transaction IDs from the third party wherein the transaction IDs have been determined by factorising the polynomial B(x) and sending aggregated transaction data relating to data record IDs associated with B(x) to the third party.

The method may comprise identifying a set P of cardholders that have completed a transaction for products associated with the data record IDs associated with B(x). The method may comprise sending transaction data associated with the set P according to the method of any of the above aspects of the disclosure. For example, the set MG(C) may be calculated as described above and sent. Additionally, the set J and total blinded sums S as described above may be sent.

The homomorphic encryption function may comprise a Paillier encryption function.

In the above methods of sending transaction data the database used may be the database according to the second aspect of the present disclosure.

According to a further example useful for understanding the present disclosure, there is provided a method of sending transaction data from a database, the database comprising transaction data in the form of a plurality of transaction records, each transaction record comprising product data for products obtained by a cardholder in a transaction, the method comprising: receiving a request for product data related to a specific product from a third party; filtering the database transaction data to identify a set P of cardholder accounts that have completed a transaction for the specific product; calculating M(P), where M() is a one way commutative function; receiving G(C) from the third party, where G() is a one way commutative function known to the third party and C is a set of data identifying accounts that have interacted with a campaign hosted by the third party for the specific product; calculating MG(C) and sending to third party such that the third party can determine the intersection of MG(P) and MG(C).

According to a further example useful for understanding the present disclosure, there is provided a method of sending transaction data from a database, the database comprising transaction data in the form of a plurality of transaction records, each transaction record comprising product data for products obtained by a cardholder in a transaction, the method comprising: receiving a request for product data related to a specific product from a third party; filtering the database transaction data to identify a set P of cardholder accounts, IDx, that have completed a transaction for the specific product for value Vx, such that P={IDx : Vx}; sending {M(IDx): E(Vx)} to the third party, where M() is a one way commutative function and E() is a homomorphic encryption function; receiving {GM(IDx):E(Vx+Rx)} from the third party, where Rx is a blinding factor applied by a third party; receiving {G(IDy)} from the third party, where G() is a one way commutative function known to the third party and {IDy} is a set of data identifying accounts that have interacted with a campaign hosted by the third party for the specific product; determining, at the database, an intersection set J of {GM(IDx)} and {MG(IDy)} and the set {E(Vx+Rx)}; decrypting values {Vx+Rx}; sending J and a total blinded sum S to the third party.

According to a further aspect of the present invention there is provided a method of sending transaction data from a database, the database comprising aggregated transaction data in the form of a plurality of transaction records, each transaction record comprising product data for products obtained by a cardholder in a transaction and having a transaction ID, wherein the database defines a set of attributes relating to the transaction records, the method comprising,: generating a polynomial Ai(X) for each attribute where the zeros of the polynomial correspond to the transaction IDs of the records that have the *ith* attribute; assigning a Tag, Tag_i, to each attribute and encrypting each Ai(x) as Enc (Ai(x)); sending the set {Tag_i, Enc(Ai(x))} to a proxy database; receiving an encrypted and blinded polynomial Enc(B(x)) from the proxy database, the polynomial comprising attributes selected by a third party; decrypting Enc(B(x)) with the third party.

According to a further example useful for understanding the present disclosure there is provided a method of sending transaction data from a database, the database comprising transaction data in the form of a plurality of transaction records, each transaction record comprising product data for products obtained by a cardholder in a transaction, the method comprising:
receiving, at the database, a request for product data related to a specific product from a third party;
filtering the database transaction data to identify a set P of cardholder accounts that have completed a transaction for the specific product;
identifying, at the third party, a set C of data identifying that have interacted with a campaign hosted by the third party for the specific product;
calculating, at the database, M(P), where M() is a one way commutative function;
calcaulating, at the third party, G(C), where G() is a one way commutative function known to the third party
receiving, at the database, G(C) from the third party;
receiving, at the third party, M(P) from the database;
calculating, at the database, MG(C) and sending to the third party
calculating, at the third party, MG(P);
determining the intersection of MG(P) and MG(C).

It is noted that the order of the steps in the above method according to the present disclosure may be varied slightly depending on the particular implementation of the method, e.g. certain steps may occur together or in a different order to that shown above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1 shows a transaction system in accordance with an embodiment of the present disclosure;
Figure 2 shows a method of retrieving data from a remote database according to an embodiment of the present disclosure;
Figure 3 shows the exchange of information between a remote database and a third party according to an embodiment of the present disclosure;
Figure 4 shows a further exchange of information between a remote database and a third party according to an embodiment of the present disclosure;
Figure 5 shows a yet exchange of information between a remote database and a third party according to an embodiment of the present disclosure;
Figure 6 shows the remote database of Figure 1.

### DETAILED DESCRIPTION

General and specific embodiments of the disclosure will be described below with reference to the Figures.

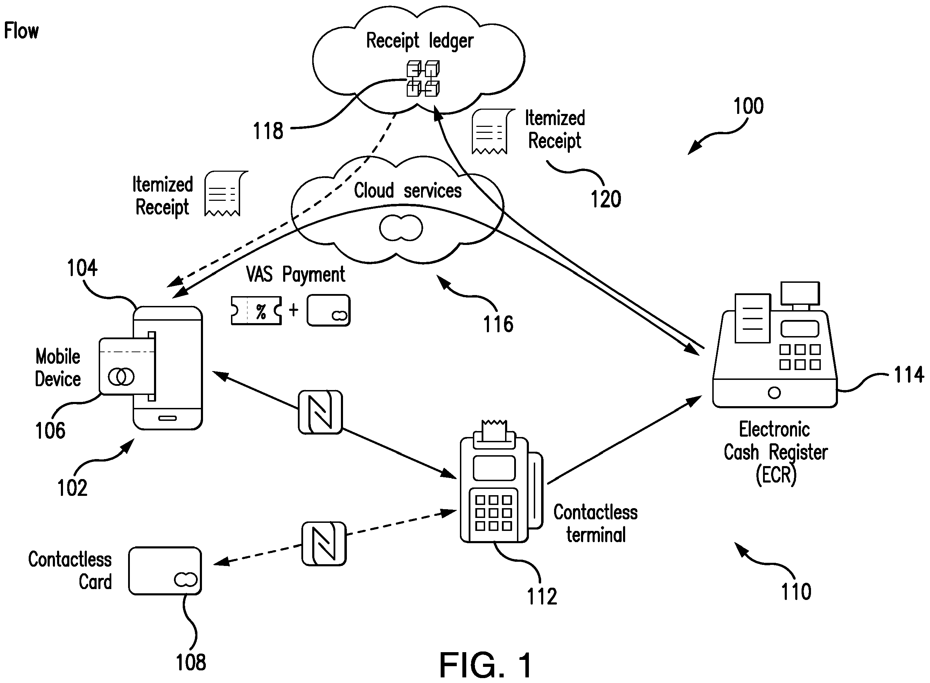

Figure 1 shows a transaction system 100 comprising a cardholder's payment device 102 (in the arrangement shown in Figure 1 this is a mobile device 104 with a digitised payment card 106 stored in a digital wallet. It is noted however that the transaction system may also comprise a physical payment card 108 in place of the mobile device), a merchant system 110 (comprising a point of sale device 112 and an electronic cash register 114), a transaction network 116 and a remote database 118.

During a transaction, a cardholder's payment device 102 undertakes a transaction with the merchant system 110. The cardholder presents their payment device 106 during the transaction and, optionally, an offer token (such as a loyalty token or voucher) and payment for the goods or services obtained from the merchant is then taken.

Once the transaction is authorised, transaction data 120 (including an itemised receipt of the goods/services obtained by the cardholder and additionally payment device data) is sent via the transaction network 116 to the remote database 118 where the transaction data is stored. Subsequently the cardholder may retrieve their itemised receipt from the remote database 118.

As a plurality of cardholders undertake transactions, the remote database is configured to receive transaction data from each transaction and to store such transaction data.

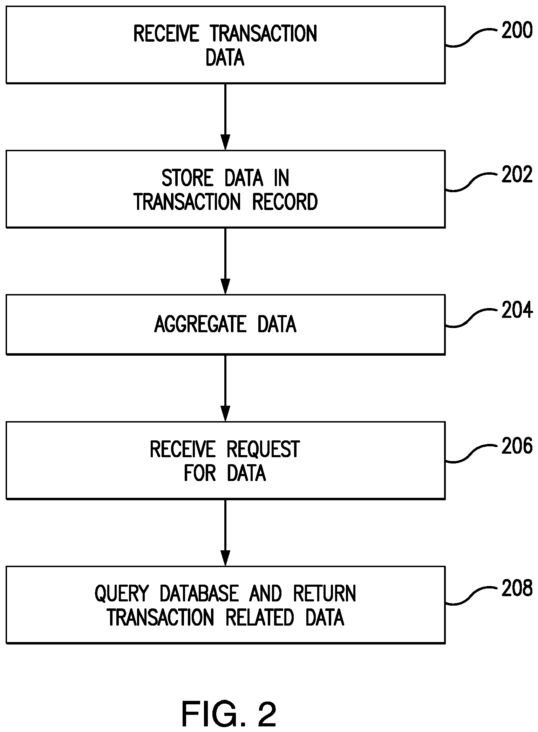

Figure 2 shows a method of retrieving data from the remote database in which in step 200 transaction data relating to cardholder transactions is received at the remote database. The transaction data for each transaction comprises itemised product data and also payment device data. It is noted that the payment device data received is sufficient to identify specific cardholders. "Product data" in the present context means an itemised receipt line item for a goods or service received from the merchant.

In step 202, the remote database is arranged to store, for each transaction, the received transaction data in a transaction record in the database, each specific transaction (transaction record) relating to a specific cardholder account.

In step 204, the received transaction data is aggregated and the aggregated transaction data is additionally stored in the records within the database. As part of the aggregation process the specific transaction data relating to a given cardholder's transaction may be aggregated into one or more transaction data categories (e.g. merchant name, merchant type, product category, product brand, transaction amount or transaction range etc.). The aggregation process may effectively create an anonymised counterpart of the cardholder's transaction data.

Following step 204 the database may comprise a number of records where each record comprises aggregated data representing a purchased item and associated payment account (PAN), date, product identifier, and price. For the sake of this example the primary index of the database is Record#. Fully itemised product data may also be present within the Record# for access by the cardholder.

In step 206 the remote database may subsequently receive a request for data relating to cardholder transactions stored in the database. Such a request may originate from the cardholder themselves or from a third party.

In Step 208 the database may be queried and either itemised product data may be returned in the event that the querying entity is the cardholder or aggregated transaction data may be returned in the event that the request is received from a third party entity.

### Use Cases

The use of the database containing transaction data and aggregated transaction data is described below in relation to two general use types: (i) where the actual consumer wishes to retrieve information relating to a transaction they have undertaken in the past (e.g. a user retrieving transaction data in order to activate or use a product warranty); (ii) where a 3rd party wants to access aggregated transaction data (e.g. so that a 3rd party can determine whether a promotional campaign for a targeted merchant (here, Walmart) and merchandise (here, electric appliances) was successful).

Consumer Access to Transaction Data (the "Warranty Use Case")

For the purposes of this example it is noted that a transaction, with the following parameters, has already taken place:
*On March 17 2019 at 15h20, John Junior Doe, son* of *John Doe, buys a Braun Brau Rasierer 7-7880cc bk electric shaver* as *sole item at Walmart Supercenter in the Green Acres Mall, Valley Stream NY. The electric shaver costs $139.90 and comes with a 2-year warranty. John Jr. pays for the shaver using his mobile device (the mobile device having been provisioned with a payment card in an application). The payment card used was* a *Mastercard with PAN 5123456789012342.*

As part of the transaction with the merchant system, an itemised receipt is generated, in JSON format, as indicated below.

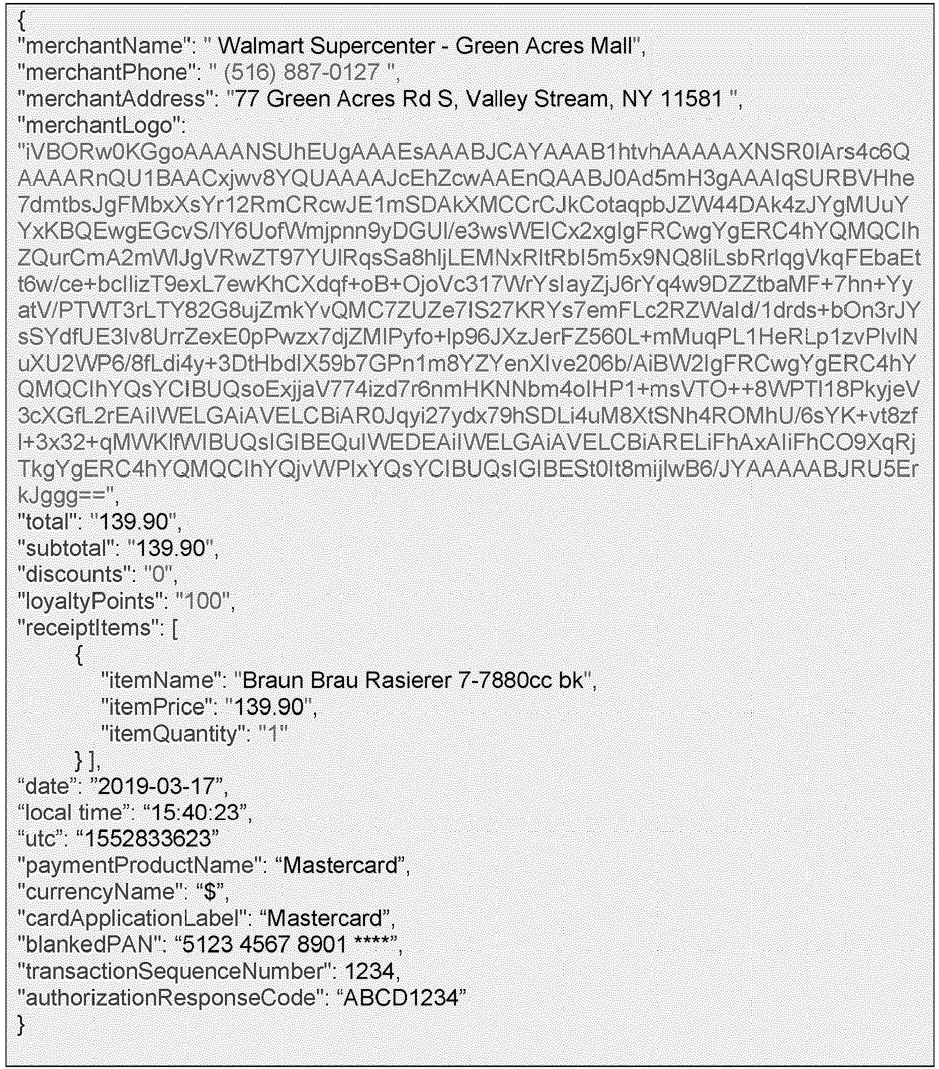

As per step 200 noted above the transaction data relating to the transaction is sent to the remote database where it is stored in a transaction record relating to consumer/cardholder "John Doe". The storage of the transaction data in the cloud at the remote database enables the consumer to retrieve information required to use the product warranty if necessary.

For example, in the event the shaver breaks down on November 5th, 2020 (which is within a 2 year warranty period) then the cardholder is able to log into the remote database (for instance, through User ID and password) as John Doe. He is then able to place a search query (e.g. a combination of one or more of the search terms: "Electric shaver"; "Braun Brau"; "March 2019"; "Walmart") in order to access the digital itemised receipt data held on the database.

Third Party Access to Transaction Data (the "Campaign Use Case")

For the purposes of this example it is noted that the same transaction as noted above, with the same parameters, has already taken place. Following the receipt of the transaction data at the remote database the itemised data (that is personal to the specific cardholder John Doe) was aggregated into a number of transaction data categories (step 204 above) and also anonymised.

An example of the anonymised transaction data to be aggregated is illustrated below.

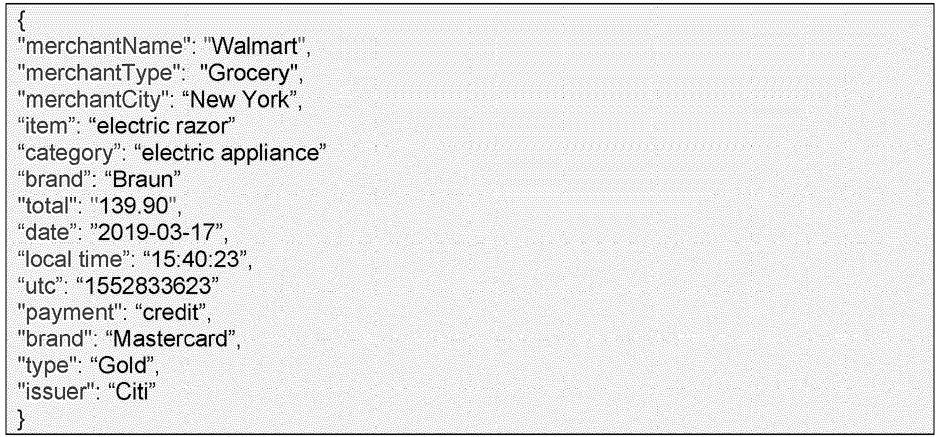

The aggregated and anonymised data may then be used by a third party as part of a campaign as follows. In February 2020, Walmart contracts the third party to start a promotional campaign on small electrical appliances affordable to youngsters that are typical for male adults, such as electric shavers or power tools. The campaign starts on March 1^{st} 2020 and runs until March 21^{st} 2020. The third party operates in the online space and while the campaign is running the third party arranges for online adverts to appear in the browsers of, at least a proportion, of users browsing small electrical appliances.

Subsequent to the campaign concluding the third party is able to demonstrate to Walmart that the campaign had an effect and increased the number of affordable electronic appliances with respect to previous years, in particular to the previous year (i.e. 2019). This demonstration may be undertaken by the third party running a query on the database, comparing the total number of electrical appliances below $200 bought at Walmart between March 1st and March 31st in 2019 - where no promotional campaign was run- and the same period for 2020. A significant difference between the two numbers should illustrate the effectiveness of the campaign and therefore the value of the adverts/campaign.

### Worked examples according to the present disclosure

The following worked examples further illustrate how transaction data within the remote database can be accessed by a third party while maintaining privacy controls.

Three worked examples are provided in order of complexity: the first deals with an advert for a specific product (e.g. Braun electric razor model 3200i), and the second deals with an advert for a product category (e.g. electrical appliances). In these two examples the third party queries the remote desktop with a search query (the transactions in which they are interested). The relevant transactions can then be filtered from the remote database and then, by means of a homomorphic protocol, the third party may be provided with a clicked subset of the associated aggregate information. In the third example the third party does not reveal their query criteria yet still manages to obtain the aggregate information for the transactions that satisfy their search query. The third example may be used on top of the existing 'double-blind' protocol in the first two worked examples or in place of it.

In the examples, distinction between a cardholder's payment account (that is known to the remote database owner) and an account that is known to the third party (e.g. an email) is not made and for simplicity the term account or ID is used.

### Worked example 1 - exchange of information in relation to a specific product

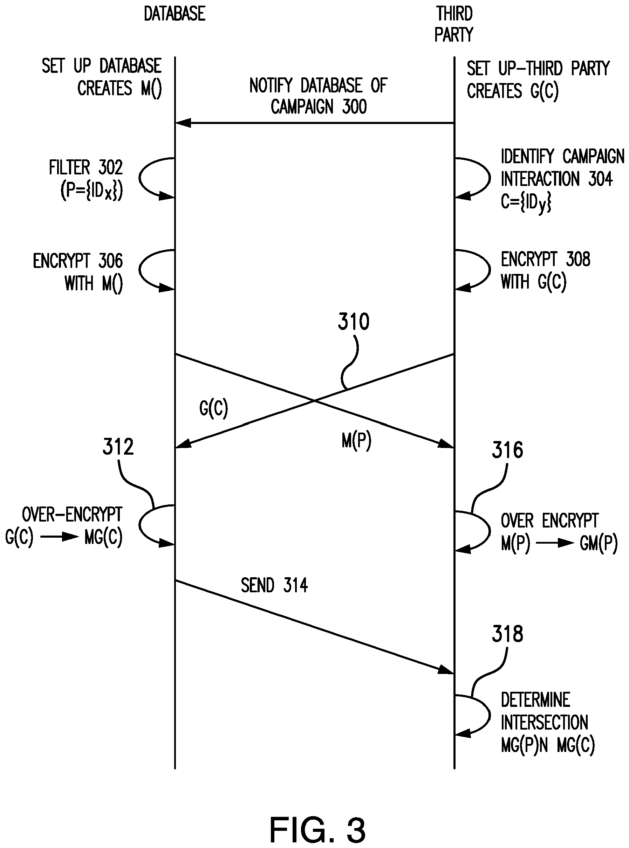

Worked example 1 is detailed below in combination with Figure 3 which shows the exchange of information between the remote database and the third party.

In this example a campaign (online adverts) has been run in respect of a specific product which is on sale at a number of merchants at roughly the same price. Consequently, it is sufficient to know the number of purchased products that correspond to a clicking of an advert (and indeed the number that do not), the actual monetary value of the transactions that has taken place is not relevant.

In Step 300, the third party informs the remote database of the campaign (product and time period) such that the remote database can identify, in step 302, all accounts that were used to purchase the specific product.

This step (302) requires access to the database of transaction data comprising itemized product data. The total number of cardholder accounts is therefore filtered and the result is a (multi-)set P of transaction data relating to 'purchased' accounts, where some accounts may be repeated if the cardholder made multiple purchases of the same product.

For the same time period, the third party identifies in step 304 all accounts that clicked on the advert for the specific product. This results in a set C of 'clicked' accounts.

Thus in notation
- P = {IDx} where IDx identifies an account that made a product purchase
- C = {IDy} where IDy identifies an account that made an advert click

In Step 306 the remote database encrypts the elements of P with its encryption function M(): M(P) = {M(IDx)}. The third party encrypts in step 308 the elements of C with its encryption function G(): G(C) = {G(IDy)}. It is noted that M() and G() are one way commutative functions known to, respectively, the remote database and the third party which are created in a set up phase. Such one way commutative functions may be elliptic curve scalar multiplications.

In Step 310 the remote database and the third party then exchange M(P) and G(C). Note, in Steps 302/304 it is possible for the remote database and the third party to include fictitious accounts that do not correspond to live accounts so that in Step 306/308 the size of the sets M(P) and G(C) do not reveal the number of product purchases or advert clicks, respectively.

In Step 312 the remote database then over-encrypts G(C) to become MG(C), shuffles the elements of the set and then sends, in step 314, the shuffled MG(C) to the third party.

In Step 316, the third party then over-encrypts M(P) to GM(P). Since the functions M and G commute then GM(P) = MG(P) and the third party is able to determine, in step 318, the intersection of the two sets MG(P) and MG(C) such that
- MG(P) ∩ MG(C) = {MG(ID) where ID is account that purchased and clicked}

By this mechanism the third party is able to determine the size of the intersection, being the number of items purchased that correspond to a click.

[It is noted that the steps shown in Figure 3 may be varied in their order slightly without affecting the overall process, for example steps 302 and 306 described herein could occur before steps 304 and 308 or vice versa. Similarly steps 312 and 316 may happen concurrently or sequentially.]

As an additional step the third party could screen out purchases that were made before an interaction with the campaign had occurred.

As an additional step, the remote database could provide the third party with the same information for unclicked accounts and also for a time period preceding the campaign. In this case, if after the campaign, the total number of items purchased increases, compared to a time period immediately prior to the campaign, by the number of purchase clicked accounts (i.e. the purchase unclicked accounts is the same for both time periods) then this is a strong argument that the additional purchases resulted from the clicks and hence the campaign.

### Worked example 2 - exchange of information in relation to a product category

In a variation to the worked example above a campaign may run in relation to a range of products which are on sale at a variety of prices at different retailers. As there is diversity in the products on sale a monetary value $value is included in the analysis below.

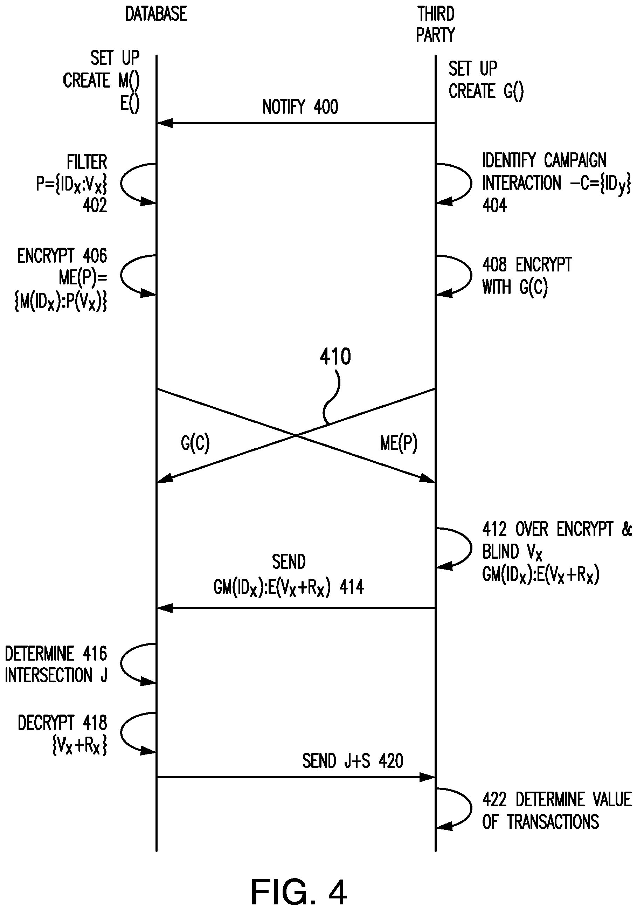

In an initial step the third party advises the remote database of a product range that is the subject of a campaign. The remote database is then able to provide aggregated transaction data to the third party as per the process below. Worked example 2 is detailed below in combination with Figure 4 which shows the exchange of information between the remote database and the third party.

In a set up phase the remote database and third party create one way encryption functions M() and G() respectively. The remote database additionally generates a key pair for Paillier homomorphic encryption E() and shares the public key with the third party.

In step 400 the third party notifies the database of the campaign (product category and time period).

In step 402, for the time period that the third party has indicated, the remote database identifies all transaction records (cardholder accounts) that were used to purchase items in the product category. This requires access to the database of transaction data comprising itemised product data. The total number of cardholder accounts is therefore filtered and the result is a (multi-)set P of aggregated transaction data relating to the 'purchased' accounts, where some accounts may be repeated if the cardholder made multiple purchases within the same product category. The remote database may optionally aggregate multiple transactions in respect of the same cardholder account and hold a single $value Vx for account IDx.

For the same time period, the third party identifies in step 404 all accounts that interacted with the campaign for the product category. This results in a set C of 'clicked' accounts.

Thus in notation
- P = {IDx : Vx} where IDx identifies an account that made product purchases $Vx
- C = {IDy} where IDy identifies an account that made an advert click

In step 406, the remote database encrypts the IDx in P with its encryption function M() and encrypts the Vx in P with the public key of the Paillier encryption function E(): M_{E}(P) = {M(IDx):P(Vx)}.

In step 408, the third party encrypts the elements of C with its encryption function G(): G(C) = {G(IDy)}.

In step 410 the remote database and the third party then exchange M_{E}(P) and G(C). It is noted that in step 402 and 404 it is possible for the remote database and the third party to include fictitious accounts that do not correspond to live accounts so that in Step 406/408 the size of the sets M_{E}(P) and G(C) do not reveal the number of product purchase accounts or advert clicked accounts, respectively.

In step 412, the third party over-encrypts each M(IDx) to form GM(IDx) and blinds each Vx with an Rx (which it records for later use in Step 420). The latter is achieved by encrypting Rx and exploiting the homomorphic properties of E(): calculating E(Rx) * E(Vx) = E(Vx + Rx).

The third party then sends, in step 414, {GM(IDx):E(Vx+Rx)} to the remote database. It is noted that the elements of the set may be shuffled so that the remote database cannot cross-correlate items received with items sent.

In Step 416, the remote database determines the purchased clicked items corresponding to the intersection J of {GM(IDx)} with {MG(IDy)} and then decrypts in step 418, the values {Vx+Rx} associated with these values.

It can be seen that the third party's blinding of the Vx prevents the remote database from knowing the total value of the purchased clicked transactions as well as preventing cross-correlation (per the shuffling at the end of Step 414).

The remote database then sends (step 420) back to the third party the set J and the total blinded value S (the sum in J of {Vx+Rx}). The third party may then use the set J to calculate (step 422) the total blind (the sum in J of {Rx}) and can then subtract this from S to reveal the total value of purchased clicked transactions.

Note: the functions M() and G() do not need to be encryption functions but rather commutative one-way functions with range equal to domain, thus satisfying G(M(z))=M(G(z)) for all z in the domain. Typical choices for commutative one-way functions M() and G() are modular exponentiation over a finite field or scalar multiplication of a point on an elliptic curve over a finite field. For example, the remote database and the third party could agree on a curve and a mapping of ID to points on the curve (which are the actual domain of the functions but the mapping is ignored for ease of exposition). Then the remote database may generate a secret scalar m and the third party generate a secret scalar g and if Qx is the point on the curve which represents IDx then M(IDx)=m·Qx and G(IDx)=g·Qx and, per Diffie-Hellman, M(G(IDx)= gm·Qx = mg·Qx = (G(M(IDx)).

Thus if using the curve P-256 with standard generator *G* =
046B17D1F2E12C4247F8BCE6E563A440F277037D812DEB33A0F4A13945D898C296 4FE342E2FE1A7F9B8EE7EB4A7C0F9E162BCE33576B315ECECBB6406837BF51F5
and with M() defined by the secret scalar m =
3CD78CF1F078BC7C376B797D2626416C0652C25214A73D07D787CE3BCFC3738F then an IDx = 123456789012346 (=0x0462D53C8ABAC0) might be mapped to the point IDx · *G* =
04B84C1BDE05E1F479E00E8DB7FF7DEF77042718F1A3C93535DFB72B4C17D0157 BFA9BEA6165BF53CA8387F34588225FE7F0A75AA619341C38E5F39D4C400E0A2A
and so the encryption of IDx under M() is m · (IDx · *G*) =
041D84DD86CB0C3334D38712117BBD891A6A73B0CF12D6860AD6BB2C33924C5C A14FF0F5FC2D0B3C8B51328E1E89E258102B79EF6790993AF06694C240A35D93EF

The Paillier encryption function E() is a homomorphic encryption function like RSA but taking place modulo n². The remote database may encrypt and decrypt, but the third party can only encrypt. As with the commutative one-way functions M() and G() there needs to be an agreed mapping to the domain, in this case, between $values and integers modulo n²which are the true domain of E(). Because n² might be over 700 bytes there will actually be space to map multiple $values into this domain.

In the first two worked examples described above the third party openly informs the remote database of the product to be queried. If this is considered a privacy problem then the remote database would either have to send the third party the full encrypted database or a privacy method such as that described in the third worked example below could be used.

### Worked example 3 - exchange of information in relation to a product category via a private query

In the third worked example privacy techniques are used to select a set of accounts {IDx} from the remote database without revealing the selection criteria to the database. The example described below additionally utilises a proxy database that is separate from the remote database described above. In the following example the selection criteria that the third party is using corresponds to "electrical appliances" from "Walmart" which are under $200.

As noted above, the present worked example involves two databases:
i. The Remote database described above which comprises a plurality of transaction records of aggregated transaction data, wherein each transaction record represents a purchased item and associated payment account (PAN), date, product identifier, and price. For the sake of this example the primary index of the database is Record#.
ii. A proxy database that enables the privacy of queries (as described below).

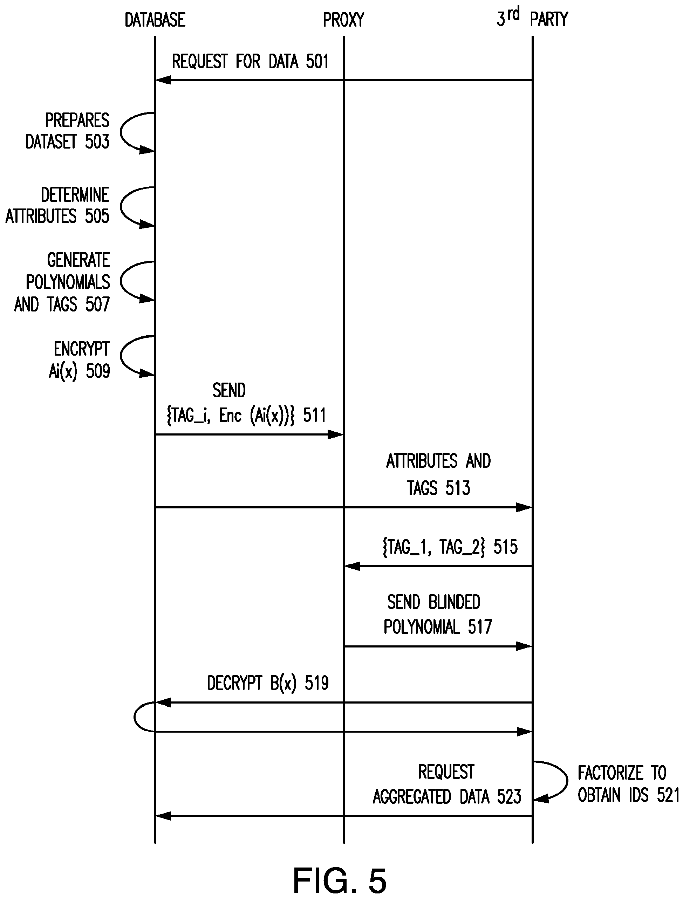

With reference to Figure 5, the remote database receives in step 501 a request from the third party related to Walmart in March 2020 and based on its historic data, the remote database prepares, in step 503, a data set as a subset of the Mastercard Items database in which the dataset contains all transactions at Walmart between March 1^{st}, 2020 and March 31^{st}, 2020.

For simplicity, it is assumed here that the dataset contains 10 transaction records, represented by the entries 1 to 10 in the table below. Each entry has an identifier equal to the Record# (written as REC) and so each entry is represented as REC1 to REC10.

In step 505 a list of attributes Ai (e.g. "electrical appliance", "<$200") are generated. Purchased items contained within the dataset fall into different product categories (e.g. electrical appliance, healthcare, beauty etc.) and have different amounts (or amount categories such as "<$200").

Within the dataset generated in step 503, for example, Records REC1, REC2 and REC5 include the purchase of an electrical appliance (indicated by transaction records with an "X"). Records 1, 2, 6, 7 and 8 include a transaction item costing less than 200$ (indicated by transaction records with a "+").

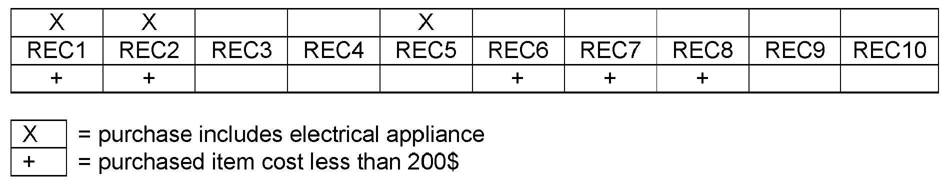

In Step 507, the remote database generates attribute polynomials Ai(x) whose zeros are the transaction IDs (REC#) of the records that have the i^{th} attribute. It is noted that the remote database is arranged to generate a polynomial for all allowed query attributes along with an attribute identifying tag (the tag being a pseudo random function hash of the name of the attribute such that attribute information is not leaked to the Proxy database).

For example, each attribute in the Walmart March 2020 data set is represented as a polynomial with roots corresponding to the matching records:

| | |
|---|---|
| Electrical appliance (X) | A1(x) = (x-REC1)(x-REC2)(x-REC5) = x³-(REC1+REC2+REC5)x²+(REC1*REC2+REC1*REC5+REC2*REC5)x-REC1*REC2*REC5 = ax³+bx²+cx+d |
| | Where |
| | a = 1 |
| | b = - (REC1+REC2+REC5) |
| | c = REC1*REC2+REC1*REC5+REC2*REC5 |
| | d = -(REC1*REC2*REC5) |
| Cost < 200$ (+) | A2(x) = (x-REC1)(x-REC2)(x-REC6)(x-REC7)(x-REC8) = ...= a'x³+b'x⁴+c'x³+d'x²+e'x+f' |
| | Where |
| | a' = 1 |
| | ... |
| | f' = REC1*REC2*REC6*REC7*REC8 |

| | |
|---|---|
| A1(x) represents a polynomial with 3 roots, where each root is the value of a REC: REC1, REC 2 and REC5 A2(x) represents a polynomial with 5 roots, again each root having the value of a REC, here REC1 REC2, REC6, REC7 and REC8. | |

In step 509, to hide the polynomials (and hence their roots) from the Proxy database, the remote database encrypts all polynomials before sending them and their tags, in step 511, to the Proxy lookup database where they are stored.

Each polynomial is encrypted in step 509 by encrypting its coefficients and the encryption function is a homomorphic encryption function E() owned by the remote database.

So polynomials A1(x) and A2(x) are stored at the proxy database as

| | | | | | | | | | |
|---|---|---|---|---|---|---|---|---|---|
| Enc[A1(x)] | | | | | | E(a) | E(b) | E(c) | E(d) |
| Enc[A2(x)] | | | | E(a') | E(b') | E(c') | E(d') | E(e') | E(f') |

The Proxy database comprises an encrypted polynomial for each attribute that might be queried and as such there may be hundreds or thousands of such polynomials (each with an identifying tag).

In step 513 the third party obtains from the remote database the list of tags and associated attributes.

In step 515 the third party sends the tags associated with the attributes they are interested in ("electrical appliance" and "<$200") to the proxy database.

In step 517 the proxy database sends the third party an encrypted blinded polynomial. The blinded polynomial is B(x) = A1(x)R1(x) + A2(x)R2(x), where the polynomials Ri(x) are random polynomials multiplication by which does not affect the zeros of the polynomial. The blinded polynomial B(x) is encrypted by encrypting the coefficients of B(X).

In step 519 the third party then interacts with the remote database (e.g. using an oblivious protocol) to determine the decrypted polynomial B(x). In step 521 the third party then factorises the result to find its roots thereby finding the record indices of the conjunction of the two queries.

These record numbers can now be used by the third party to request from the remote database the desired records from the database in step 523. The aggregated data corresponding to the identified records may be retrieved using a protocol as shown in either Worked Example 1 or 2 above.

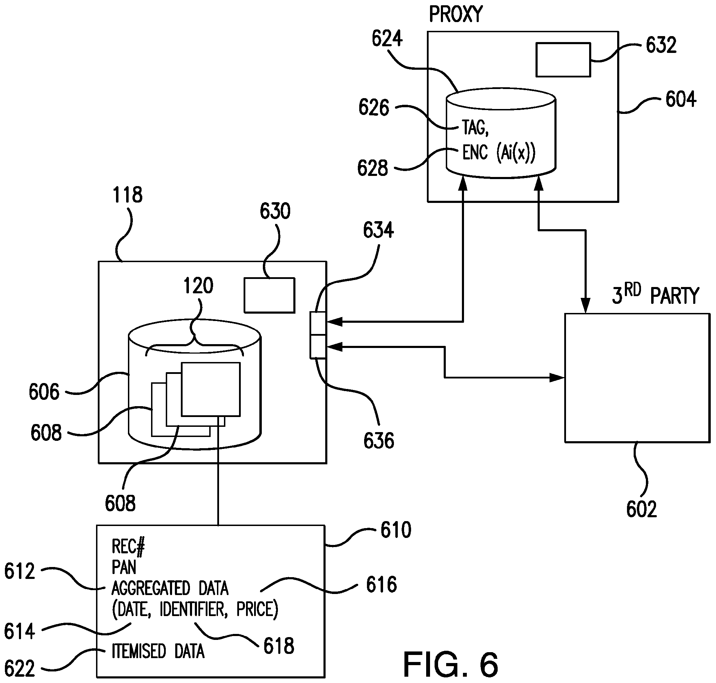

Figure 6 shows the remote database 118 of Figure 1, a third party computing device 602 representing the third party and the proxy database 604. The remote database 118 comprises a data store 606 within which transaction data 120 is stored in the form of a number of transaction records 608 where each record 610 comprises aggregated data 612 representing a purchased item and associated payment account (PAN) 614, date 616, product identifier 618, and price 620. For the sake of this example the primary index of the database is REC#. Fully itemised product data 622 may also be present within the Record# for access by the cardholder. The proxy database 604 comprises a data store 624 within which are the tags 626 and encrypted attributes 628 received from the remote database 118. The remote database 118 comprises an input 634 for receiving transaction data relating to cardholder transactions and requests from cardholders or third parties for transaction data stored in the database and an output 636 for outputting transaction data. The remote database 118 and proxy database 604 comprise processors (630, 632 respectively) arranged to carry out the various method steps described above in relation to Figures 2 through 5.

Many modifications may be made to the above examples without departing from the scope of the present disclosure as defined in the accompanying claims.

## Claims

1. A method of sending data related to cardholder transactions, performed by a remote database, comprising
receiving (200) transaction data from a merchant relating to the cardholder transactions, the transaction data comprising itemised product data and payment device data, the itemised product data comprising itemised receipt line items for goods or services received from the merchant;
storing (202), for each cardholder transaction, the received transaction data relating to that transaction in a transaction record in the remote database, wherein each transaction record comprises a transaction ID and wherein the remote database defines a set of attributes relating to the transaction records;
aggregating (204) the received transaction data and storing the aggregated transaction data in the transaction records;
receiving, from a third party, (206, 501) a request for data related to cardholder transactions stored in the remote database;
generating (507) a polynomial Ai(X) for each attribute whose zeros correspond to the transaction IDs of the records that have the *ith* attribute; assigning (507) a Tag, Tag_i, to each attribute and encrypting (509) each Ai(x) as Enc (Ai(x)) sending (511) a set {Tag_i, Enc(Ai(x))} to a proxy database;
receiving an encrypted and blinded polynomial Enc(B(x)) that is based on the polynomial Ai(x) from the proxy database through the third party, the polynomial Enc (B(x)) comprising attributes selected by the third party;
decrypting Enc(B(x)) and sending the decrypted polynomial B(x) to the third party;
querying (208) the remote database based on the decrypted polynomial B(x) and returning aggregated transaction data to the third party.

2. A method as claimed in Claim 1, wherein the received transaction data is anonymised and the aggregated and anonymised transaction data is stored in the transaction records.

3. A method as claimed in Claim 1, comprising receiving transaction IDs from the third party wherein the transaction IDs have been determined by factorising the polynomial B(x), sending aggregated transaction data relating to transaction IDs associated with the polynomial B(x) to the third party.

4. A method as claimed in Claim 1 or 3, comprising identifying a set P of cardholders that have completed a transaction for products associated with the transaction IDs associated with the polynomial B(x).

5. A remote database (118) comprising transaction data related to cardholder transactions, the remote database comprising:
an input (632) arranged to receive the transaction data (120) from a merchant relating to the cardholder transactions, the transaction data comprising itemised product data and payment device data, the itemised product data comprising itemised receipt line items for goods or services received from the merchant;
a processor (630) arranged to :
store, for each cardholder transaction, the received transaction data relating to that transaction in a transaction record in the remote database (610), wherein each transaction record comprises a transaction ID and wherein the remote database defines a set of attributes relating to the transaction records;
aggregate the received transaction data and store the aggregated transaction data in the transaction records;
an output (634) for outputting transaction data
wherein the input is arranged to further receive requests for cardholder transactions stored in the remote database from a third party; the processor being arranged to:
generate (507) a polynomial Ai(X) for each attribute whose zeros correspond to the transaction IDs of the records that have the *ith* attribute;
assign (507) a Tag, Tag_i, to each attribute and encrypt (509) each Ai(x) as Enc (Ai(x))
wherein the output is arranged to send (511) a set {Tag_i, Enc(Ai(x))} to a proxy database and the input is arranged to receive an encrypted and blinded polynomial Enc(B(x)) that is based on the polynomial Ai(x) from the proxy database, the polynomial Enc (B(x)) comprising attributes selected by the third party;
and the processor is arranged to decrypt Enc(B(x)) and send the decrypted polynomial B(x) to the third party;
and the processor is arranged to query the transaction records based on the decrypted polynomial B(x) and return aggregated transaction data (612) to the third party, the output being arranged to output the returned transaction data to the third party.

## Patentansprüche

1. Verfahren zum Senden von Daten im Zusammenhang mit Karteninhabertransaktionen, das durch eine entfernte Datenbank durchgeführt wird, umfassend
Empfangen (200) von Transaktionsdaten von einem Händler im Zusammenhang mit Karteninhabertransaktionen, die Transaktionsdaten umfassend aufgeschlüsselte Produktdaten und Zahlungsvorrichtungsdaten, die aufgeschlüsselten Produktdaten umfassend aufgeschlüsselte Belegpositionen für von dem Händler erhaltene Waren oder Dienstleistungen;
Speichern (202), für jede Karteninhabertransaktion, der empfangenen Transaktionsdaten im Zusammenhang mit dieser Transaktion in einem Transaktionsdatensatz in der entfernten Datenbank, wobei jeder Transaktionsdatensatz eine Transaktions-ID umfasst und wobei die entfernte Datenbank einen Satz von Attributen im Zusammenhang mit Transaktionsdatensätzen definiert;
Aggregieren (204) der empfangenen Transaktionsdaten und Speichern der aggregierten Transaktionsdaten in den Transaktionsdatensätzen;
Empfangen, von einer Drittpartei, (206, 501) einer Anfrage von Daten im Zusammenhang mit Karteninhabertransaktionen, die in der entfernten Datenbank gespeichert sind;
Erzeugen (507) eines Polynoms Ai(X) für jedes Attribut, dessen Nullen den Transaktions-IDs der Datensätze entsprechen, die das *i-te* Attribut aufweisen, Zuweisen (507) eines Tag, Tag_i, zu jedem Attribut und Verschlüsseln (509) jedes Ai(x) als Enc (Ai(x))
Senden (511) eines Satzes {Tag_i, Enc(Ai(x))} an eine Proxy-Datenbank;
Empfangen eines verschlüsselten und verblindeten Polynoms Enc(B(x)), das auf dem Polynom Ai(x) basiert, aus der Proxy-Datenbank durch die Drittpartei, das Polynom Enc (B(x)) umfassend Attribute, die durch die Drittpartei ausgewählt sind;
Entschlüsseln von Enc(B(x)) und Senden des entschlüsselten Polynoms B(x) an die Drittpartei;
Abfragen (208) der entfernten Datenbank basierend auf dem entschlüsselten Polynom B(x) und Zurückgeben von aggregierten Transaktionsdaten an die Drittpartei.

2. Verfahren nach Anspruch 1, wobei die empfangenen Transaktionsdaten anonymisiert werden und die aggregierten und anonymisierten Transaktionsdaten in den Transaktionsdatensätzen gespeichert werden.

3. Verfahren nach Anspruch 1, umfassend Empfangen von Transaktions-IDs von der Drittpartei, wobei die Transaktions-IDs durch Faktorisieren des Polynoms B(x) bestimmt wurden, Senden von aggregierten Transaktionsdaten im Zusammenhang mit Transaktions-IDs, die dem Polynom B(x) zugehörig sind, an die dritte Partei.

4. Verfahren nach Anspruch 1 oder 3, umfassend ein Identifizieren eines Satzes P von Karteninhabern, die eine Transaktion für Produkte abgeschlossen haben, die den Transaktions-IDs zugehörig sind, die dem Polynom B(x) zugehörig sind.

5. Entfernte Datenbank (118), umfassend Transaktionsdaten im Zusammenhang mit Karteninhabertransaktionen, die entfernte Datenbank umfassend:
einen Eingang (632), der angeordnet ist, um die Transaktionsdaten (120) von einem Händler im Zusammenhang mit Karteninhabertransaktionen zu empfangen, die Transaktionsdaten umfassend aufgeschlüsselte Produktdaten und Zahlungsvorrichtungsdaten, die aufgeschlüsselten Produktdaten umfassend aufgeschlüsselte Belegpositionen für von dem Händler erhaltene Waren oder Dienstleistungen;
einen Prozessor (630), der angeordnet ist zum:
Speichern, für jede Karteninhabertransaktion, der empfangenen Transaktionsdaten im Zusammenhang mit dieser Transaktion in einem Transaktionsdatensatz in der entfernten Datenbank (610), wobei jeder Transaktionsdatensatz eine Transaktions-ID umfasst und wobei die entfernte Datenbank einen Satz von Attributen im Zusammenhang mit Transaktionsdatensätzen definiert;
Aggregieren der empfangenen Transaktionsdaten und Speichern der aggregierten Transaktionsdaten in den Transaktionsdatensätzen;
einen Ausgang (634) zum Ausgeben von Transaktionsdaten
wobei der Eingang angeordnet ist, um ferner Anfragen für Karteninhabertransaktionen, die in der entfernten Datenbank gespeichert sind, von einer Drittpartei zu empfangen;
wobei der Prozessor angeordnet ist zum:
Erzeugen (507) eines Polynoms Ai(X) für jedes Attribut, dessen Nullen den Transaktions-IDs der Datensätze entsprechen, die das i-te Attribut aufweisen;
Zuweisen (507) eines Tag, Tag_i, zu jedem Attribut und Verschlüsseln (509) jedes Ai(x) als Enc (Ai(x))
wobei der Ausgang angeordnet ist, um einen Satz {Tag_i, Enc(Ai(x))} an eine Proxy-Datenbank zu senden (511), und der Eingang angeordnet ist, um ein verschlüsseltes und verblindetes Polynom Enc(B(x)), das auf dem Polynom Ai(x) basiert, aus der Proxy-Datenbank zu empfangen, das Polynom Enc (B(x)) umfassend Attribute, die durch die Drittpartei ausgewählt sind;
und der Prozessor angeordnet ist, um Enc(B(x)) zu entschlüsseln und das entschlüsselte Polynom B(x) an die Drittpartei zu senden;
und der Prozessor angeordnet ist, um die Transaktionsdatensätze basierend auf dem entschlüsselten Polynom B(x) abzufragen und aggregierte Transaktionsdaten (612) an die Drittpartei zurückzugeben, wobei die Ausgabe angeordnet ist, um die zurückgegebenen Transaktionsdaten an die Drittpartei auszugeben.

## Revendications

1. Procédé d'envoi de données relatives aux transactions de titulaires de cartes, effectué par une base de données distante, comprenant
la réception (200) de données de transaction d'un commerçant relatives aux transactions du titulaire de la carte, les données de transaction comprenant des données détaillées sur le produit et des données sur le dispositif de paiement, les données détaillées sur le produit comprenant des lignes d'articles détaillées pour des biens ou des services reçus du commerçant ;
le stockage (202), pour chaque transaction de titulaire de carte, des données de transaction reçues relatives à cette transaction dans un enregistrement de transaction dans la base de données distante, dans lequel chaque enregistrement de transaction comprend un identifiant de transaction et dans lequel la base de données distante définit un ensemble d'attributs relatifs aux enregistrements de transaction ;
l'agrégation (204) des données de transaction reçues et le stockage des données de transaction agrégées dans les enregistrements de transaction ;
la réception, de la part d'un tiers, (206, 501) d'une demande de données relatives à des transactions de titulaire de carte stockées dans la base de données distante ;
la génération (507) d'un polynôme Ai(X) pour chaque attribut dont les zéros correspondent aux identifiants de transaction des enregistrements ayant le *ième* attribut attribuant (507) une étiquette, Tag_i, à chaque attribut et le chiffrement (509) de chaque Ai(x) sous la forme Enc(Ai(x))
l'envoi (511) d'un ensemble {Tag_i, Enc(Ai(x))} à une base de données proxy ;
la réception d'un polynôme Enc(B(x)) chiffré et masqué, basé sur le polynôme Ai(x) de la base de données proxy par le biais du tiers, le polynôme Enc(B(x)) comprenant des attributs sélectionnés par le tiers ;
le déchiffrage de Enc(B(x)) et l'envoi du polynôme déchiffré B(x) au tiers ;
l'interrogation (208) de la base de données distante sur la base du polynôme déchiffré B(x) et le renvoi de données de transaction agrégées au tiers.

2. Procédé selon la revendication 1, dans lequel les données de transaction reçues sont anonymisées et les données de transaction agrégées et anonymisées sont stockées dans les enregistrements de transaction.

3. Procédé selon la revendication 1, comprenant la réception d'identifiants de transaction provenant du tiers, dans lequel les identifiants de transaction ont été déterminés par factorisation du polynôme B(x), l'envoi au tiers de données de transaction agrégées relatives aux identifiants de transaction associés au polynôme B(x).

4. Procédé selon la revendication 1 ou 3, comprenant l'identification d'un ensemble P de titulaires de cartes ayant effectué une transaction pour des produits associés aux identifiants de transaction associés au polynôme B(x).

5. Base de données distante (118) comprenant des données de transaction relatives à des transactions de titulaire de carte, la base de données distante comprenant :
une entrée (632) conçue pour recevoir les données de transaction (120) d'un commerçant relatives aux transactions du titulaire de carte, les données de transaction comprenant des données détaillées sur le produit et des données sur le dispositif de paiement, les données détaillées sur le produit comprenant des lignes de reçus détaillés pour des biens ou des services reçus du commerçant ;
un processeur (630) configuré pour :
stocker, pour chaque transaction du titulaire de la carte, les données de transaction reçues relatives à cette transaction dans un enregistrement de transaction dans la base de données distante (610), dans lequel chaque enregistrement de transaction comprend un identifiant de transaction et dans lequel la base de données distante définit un ensemble d'attributs relatifs aux enregistrements de transaction ;
agréger les données de transaction reçues et stocker les données de transaction agrégées dans les enregistrements de transaction ;
une sortie (634) pour l'émission de données de transaction
dans lequel l'entrée est conçue pour continuer à recevoir d'un tiers des demandes de transactions de titulaire de carte stockées dans la base de données distante ;
le processeur étant conçu pour :
générer (507) un polynôme Ai(X) pour chaque attribut dont les zéros correspondent aux identifiants de transaction des enregistrements ayant le *ième* attribut ;
attribuer (507) une étiquette, Tag_i, à chaque attribut et chiffrer (509) chaque Ai(x) comme Enc(Ai(x))
dans lequel la sortie est conçue pour envoyer (511) un ensemble {Tag_i, Enc(Ai(x))} à une base de données proxy et l'entrée est conçue pour recevoir un polynôme Enc(B(x)) chiffré et masqué qui est basé sur le polynôme Ai(x) de la base de données proxy, le polynôme Enc(B(x)) comprenant des attributs sélectionnés par le tiers ;
et le processeur est conçu pour déchiffrer Enc(B(x)) et envoyer le polynôme déchiffré B(x) au tiers ;
et le processeur est conçu pour interroger les enregistrements de transactions sur la base du polynôme déchiffré B(x) et renvoyer des données de transactions agrégées (612) au tiers, la sortie étant conçue pour envoyer les données de transactions renvoyées au tiers.
